# EUROPÄISCHE PATENTSCHRIFT

(11) **EP 4 396 050 B1**
(45) Veröffentlichungstag und Bekanntmachung des Hinweises auf die Patenterteilung: **20.08.2025**
(21) Anmeldenummer: 22754860.9
(22) Anmeldetag: 25.07.2022
(51) Int. Cl.: B60T 7/20, B60T 11/10, B60T 13/66, B60T 13/68

(54) **ANHÄNGERSTEUERVENTIL EINES ZUGFAHRZEUGS**
TRAILER CONTROL VALVE FOR A TRACTOR
VANNE DE COMMANDE DE REMORQUE POUR UN VEHICULE TRACTEUR

(30) Priorität: 30.08.2021 DE 102021122322
(43) Veröffentlichungstag der Anmeldung: 10.07.2024
(73) Patentinhaber: ZF CV Systems Global GmbH, 3006 Bern (CH)
(72) Erfinder: BRÜTT, Mirko, 31832 Springe (DE); SPREMBERG, Jan, 30974 Wennigsen (DE)
(74) Vertreter: ZF Friedrichshafen AG
(86) Internationale Anmeldenummer: PCT/EP2022/070727
(87) Internationale Veröffentlichungsnummer: WO 2023/030756

(56) Entgegenhaltungen:
- EP-B1- 3 266 661
- EP-B1- 3 353 027

## Beschreibung

Die Erfindung betrifft ein Anhängersteuerventil eines Zugfahrzeugs zur Steuerung einer hydraulischen Zweileitungsbremsanlage eines Anhängefahrzeugs, mit einem Vorratsdruckeingang zum Anschluss einer hydraulischen Vorratsleitung des Zugfahrzeugs, mit einem Tankausgang zum Anschluss einer drucklosen Rücklaufleitung des Zugfahrzeugs, mit einem Bremsdruckausgang zum Anschluss einer Bremsleitung des Anhängefahrzeugs, und mit einem Zusatzdruckausgang zum Anschluss einer Zusatzleitung des Anhängefahrzeugs, bei dem der Bremsdruckausgang mittels eines elektronisch steuerbaren Bremssteuerventils abgestuft mit dem Vorratsdruckeingang oder mit dem Tankausgang verbindbar ist, und bei dem der Zusatzdruckausgang über eine Ventilanordnung mit mindestens einem elektronisch steuerbaren Ventil entweder unter Absenkung eines Ausgangsdruckes des Vorratsdrucks auf einen Zusatzdruck mit dem Vorratsdruckeingang oder mit dem Tankausgang verbindbar ist.

Gemäß der EU-Verordnung Nr. 2015/68, die sich auf Bremsanlagen von vorwiegend für den Einsatz in der Land- und Forstwirtschaft vorgesehenen Fahrzeugen und Anhängern bezieht, können ab dort genannten Zeitpunkten nur noch Fahrzeuge und Anhänger mit Zweileitungsbremsanlagen neu zugelassen werden. Dies gilt sowohl für Fahrzeuge und Anhänger, welche mit Druckluftbremsanlagen ausgerüstet sind, als auch für Fahrzeuge und Anhänger, welche hydraulische Bremsanlagen aufweisen.

Bei Anhängefahrzeugen mit Zweileitungs-Druckluftbremsanlagen sind zwischen dem Zugfahrzeug und dem Anhängefahrzeug in Analogie zu vorwiegend für den Straßenverkehr vorgesehenen Anhängefahrzeugen jeweils eine im Betrieb unter einem hohen Vorratsdruck stehende Vorratsleitung zur Übertragung von Druckluft als Energieträger sowie eine Bremssteuerleitung zur Übertragung eines variablen Bremssteuerdruckes zur Ansteuerung eines Bremssteuerventils in dem Anhängefahrzeug vorgesehen.

Im Unterschied dazu ist bei Anhängefahrzeugen mit hydraulischer Bremsanlage zwischen dem Zugfahrzeug und dem Anhängefahrzeug jeweils eine Bremsleitung zur Übertragung von Drucköl als Energieträger sowie eines variablen Bremsdruckes zwischen 0 und 150 × 10⁵ Pa zur Betätigung der Betriebsbremsen des Anhängefahrzeugs sowie eine Zusatzleitung zur Übertragung eines konstanten Zusatzdruckes zwischen 15 × 10⁵ Pa und 35 × 10⁵ Pa zur Steuerung von Sicherheitsfunktionen der Bremsanlage des Anhängefahrzeugs vorgesehen. Bei den Sicherheitsfunktionen handelt es sich wie folgt um die Auslösung einer Notbremsung des Anhängefahrzeugs bei einem Abriss der Bremsleitung und/oder der Zusatzleitung, um die Auslösung einer Notbremsung des Anhängefahrzeugs bei einer Betätigung eines Notausschalters im Zugfahrzeug, um die Auslösung einer Hilfsbremsung des Anhängefahrzeugs über einen Druckspeicher des Anhängefahrzeugs bei einer starken Betätigung des Bremspedals im Zugfahrzeug und, sofern das Anhängefahrzeug mit Federspeicherbremszylindern ausgerüstet ist, um das Ein- und Auslegen der Feststellbremse des Anhängefahrzeugs.

Aus der EP 3 266 661 B1 ist ein hydraulisches Bremssystem eines Anhängefahrzeugs bekannt, welches für den Betrieb einer hydraulischen Zweileitungsbremsanlage des Anhängefahrzeugs vorgesehen ist, jedoch auch kompatibel mit einem Anhängersteuerventil eines Zugfahrzeugs für eine Einleitungsbremsanlage eines Anhängefahrzeugs ist. Das Bremssystem umfasst eine Kupplungsbaugruppe, eine Ventilbaugruppe und eine Druckregelgruppe. Die Kupplungsbaugruppe weist eine Anschlusskupplung zum Anschluss einer an eine Bremsleitungskupplung des Zugfahrzeugs anschließbare Bremsleitung, eine Anschlusskupplung zum Anschluss einer an eine Zusatzleitungskupplung des Zugfahrzeugs anschließbare Zusatzleitung, und eine Kurzschlusskupplung auf. Bei einem für eine hydraulische Zweileitungsbremsanlage des Anhängefahrzeugs ausgebildeten Anhängersteuerventil des Zugfahrzeugs werden die Bremsleitung und die Zusatzleitung an die entsprechenden Kupplungen des Zugfahrzeugs angeschlossen. Bei einem für eine hydraulische Einleitungsbremsanlage des Anhängerfahrzeugs ausgebildeten Anhängersteuerventil wird die Bremsleitung an die Bremsleitungskupplung des Zugfahrzeugs und das zugfahrzeugseitige Ende der Zusatzleitung an die Kurzschlusskupplung des Anhängefahrzeugs bzw. der Kupplungsbaugruppe angeschlossen.

Die Ventilbaugruppe umfasst ein druckgesteuertes 3/2-Wege-Schaltventil und ein manuell betätigbares 2/2-Wege-Schaltventil. Das 3/2-Wege-Schaltventil wird weitgehend über den in der Zusatzleitung anliegenden Zusatzdruck gesteuert. Bei niedrigem Zusatzdruck befindet sich das 3/2-Wege-Schaltventil in seiner Ruheposition, in der die Bremsleitung über ein in Rückströmrichtung sperrendes Rückschlagventil mit einem Druckspeicher und einem Eingang der Druckregelgruppe verbunden ist. Bei hohem Zusatzdruck befindet sich das 3/2-Wege-Schaltventil in seiner Schaltposition, in der die Anschlusskupplung der Bremsleitung unmittelbar mit dem Eingang der Druckregelgruppe und über ein in Rückströmrichtung sperrendes Rückschlagventil mit dem Druckspeicher verbunden ist. Mittels des 2/2-Wege-Schaltventils kann der Druckspeicher bei druckloser Bremsleitung bedarfsweise entleert werden. Die Druckregelgruppe weist ein Druckregelventil auf, das als ein 2/2-Wege-Proportionalmagnetventil ausgebildet ist. Das Proportionalventil, an dessen ausgangsseitigem Druckanschluss Radbremszylinder des Anhängefahrzeugs angeschlossen sind, dient zur Modulierung des in den Radbremszylindern wirksamen Bremsdruckes in Abhängigkeit des Beladungszustands des Anhängefahrzeugs. Weitere Eigenschaften und die Funktionsweise dieses bekannten hydraulischen Bremssystems in bestimmten Betriebssituationen sind einer ausführlichen Beschreibung in der EP 3 266 661 B1 entnehmbar.

Zudem ist in der EP 3 353 027 B1 ein hydraulisches Bremssystem für ein Anhängefahrzeug beschrieben, welches ein in einem Zugfahrzeug angeordnetes Anhängersteuerventil und ein in dem Anhängefahrzeug angeordnetes Ventilmodul aufweist, welche über eine Bremsleitung und eine Zusatzleitung miteinander verbunden sind. Das Anhängersteuerventil weist einen Vorratsdruckeingang zum Anschluss einer einen Vorratsdruck führenden hydraulischen Vorratsleitung des Zugfahrzeugs, einen Tankausgang um Anschluss einer drucklosen Rücklaufleitung des Zugfahrzeugs, einen Bremsdruckausgang zum Anschluss der Bremsleitung und einen Zusatzdruckausgang zum Anschluss der Zusatzleitung auf. Der Bremsdruckausgang ist über ein als ein Proportionalmagnetventil ausgebildetes Bremssteuerventil abgestuft mit dem Vorratsdruckeingang oder dem Tankausgang verbindbar ist. Der Zusatzdruckausgang ist ebenfalls über ein als ein Proportionalmagnetventil ausgebildetes Zusatzsteuerventil abgestuft mit dem Vorratsdruckeingang oder mit dem Tankausgang verbindbar. Zur Erfassung des an dem Bremsdruckausgang anliegenden Bremsdruckes ist zwischen dem Arbeitsausgang des Bremssteuerventils und dem Bremsdruckausgang ein Drucksensor angeschlossen. Zur Messung des an dem Zusatzdruckausgang anliegenden Zusatzdruckes ist zwischen dem Arbeitsausgang des Zusatzsteuerventils und dem Steuerdruckausgang ein Drucksensor angeschlossen.

Das Ventilmodul weist ein druckgesteuertes 3/2-Wege-Schaltventil und ein druckgesteuertes 3/3-Wege-Proportionalventil auf. Über das 3/2-Wege-Schaltventil, das eingangsseitig an die Bremsleitung angeschlossen ist, und welches von der Druckdifferenz zwischen dem Bremsdruck und einem Speicherdruck eines angeschlossenen Druckspeichers gesteuert wird, wird der Druckspeicher mit einem Druckmittel gefüllt, sofern der Speicherdruck niedriger ist als der Bremsdruck. Über das 3/3-Wege-Proportionalventil, welches eingangsseitig über das 3/2-Wege-Schaltventil an die Bremsleitung sowie unmittelbar an den Druckspeicher angeschlossen ist, und welches von der Druckdifferenz zwischen dem Bremsdruck in einer ausgangsseitig angeschlossenen Hauptbremsleitung zur Betätigung der Betriebsbremsen des Anhängefahrzeugs und dem Bremsdruck sowie dem Zusatzdruck gesteuert wird, wird die Hauptbremsleitung entweder mit der Bremsleitung und dem Speicherbehälter verbunden, oder nur mit der Bremsleitung verbunden, oder nur mit dem Speicherbehälter verbunden. Die Zusatzleitung ist dagegen nur über eine Verbindungsleitung mit einer Parkbremsleitung zum Einlegen und Auslegen der durch Federspeicherbremszylinder betätigbaren Feststellbremsen des Anhängefahrzeugs verbunden.

EP 3 353 027 B1 betrifft ein System und Verfahren zum Betrieb einer hydraulischen Fahrzeuganhängerbremse unter Verwendung einer an einem Fahrzeug bereitgestellten Hydraulikflüssigkeitszufuhr, wobei eine Steuerleitung und eine zusätzliche Leitung zwischen dem Fahrzeug und einem Fahrzeuganhänger für die Versorgung mit Hydraulikflüssigkeit zum und vom Anhänger angeordnet sind.

Vor diesem Hintergrund liegt der Erfindung die Aufgabe zugrunde, ein Anhängersteuerventil eines Zugfahrzeugs zur Steuerung einer hydraulischen Zweileitungsbremsanlage eines Anhängefahrzeugs der eingangs genannten Bauart vorzustellen, welches möglichst einfach und kostengünstig aufgebaut ist sowie die Anforderungen zur Steuerung der Bremsanlage des Anhängefahrzeugs gemäß der eingangs genannten EU-Verordnung 2015/68 erfüllt.

Die Lösung dieser Aufgabe wird mit einem Anhängersteuerventil erreicht, welches die Merkmale des Anspruchs 1 aufweist. Gleiches trifft für ein Anhängersteuerventil mit den Merkmalen des unabhängigen Anspruchs 2 zu, bei dem zwei Ventile in deren Anordnung miteinander vertauscht sind. Die abhängigen Ansprüche definieren vorteilhafte Ausgestaltungen dieser Anhängersteuerventile.

Demnach betrifft die Erfindung gemäß der im Anspruch 1 definierten ersten Variante ein Anhängersteuerventil eines Zugfahrzeugs zur Steuerung einer hydraulischen Zweileitungsbremsanlage eines Anhängefahrzeugs. Dieses Anhängersteuerventil weist einen Vorratsdruckeingang zum Anschluss einer hydraulischen Vorratsleitung des Zugfahrzeugs, einen Tankausgang zum Anschluss einer drucklosen Rücklaufleitung des Zugfahrzeugs, einen Bremsdruckausgang zum Anschluss einer Bremsleitung des Anhängefahrzeugs, und einen Zusatzdruckausgang zum Anschluss einer Zusatzleitung des Anhängefahrzeugs auf. Der Bremsdruckausgang ist mittels eines elektronisch steuerbaren Bremssteuerventils abgestuft mit dem Vorratsdruckeingang oder mit dem Tankausgang verbindbar. Zudem ist der Zusatzdruckausgang über eine Ventilanordnung mit mindestens einem elektronisch steuerbaren Ventil entweder unter Absenkung eines Ausgangsdruckes des Vorratsdrucks auf einen Zusatzdruck mit dem Vorratsdruckeingang oder mit dem Tankausgang verbindbar.

Bei diesem Anhängersteuerventil ist zur Lösung der gestellten Aufgabe vorgesehen, dass die Ventilanordnung ein Druckbegrenzungsventil und ein Abschaltventil aufweist, dass das Druckbegrenzungsventil und das Abschaltventil seriell hintereinander angeordnet sind, wobei das Abschaltventil dem Druckbegrenzungsventil strömungstechnisch nachgeschaltet angeordnet ist, dass der Ausgangsdruck der Ventilanordnung mittels des Druckbegrenzungsventils auf den Zusatzdruck absenkbar ist, und dass das Abschaltventil als ein 3/2-Wege-Magnetschaltventil ausgebildet ist, über welches der Zusatzdruckausgang in dessen unbestromten Zustand mit dem Tankausgang und in dessen bestromten Zustand mit dem Arbeitsausgang des Druckbegrenzungsventils verbunden ist.

Gemäß der im Anspruch 2 definierten zweiten Variante betrifft die Erfindung das gleiche Anhängersteuerventil eines Zugfahrzeugs zur Steuerung einer hydraulischen Zweileitungsbremsanlage eines Anhängefahrzeugs. Auch dieses Anhängersteuerventil weist einen Vorratsdruckeingang zum Anschluss einer hydraulischen Vorratsleitung des Zugfahrzeugs, einen Tankausgang zum Anschluss einer drucklosen Rücklaufleitung des Zugfahrzeugs, einen Bremsdruckausgang zum Anschluss einer Bremsleitung des Anhängefahrzeugs, und einen Zusatzdruckausgang zum Anschluss einer Zusatzleitung des Anhängefahrzeugs auf. Der Bremsdruckausgang ist ebenso mittels eines elektronisch steuerbaren Bremssteuerventils abgestuft mit dem Vorratsdruckeingang oder mit dem Tankausgang verbindbar. Zudem ist der Zusatzdruckausgang über eine Ventilanordnung mit mindestens einem elektronisch steuerbaren Ventil entweder unter Absenkung eines Ausgangsdruckes des Vorratsdrucks auf einen Zusatzdruck mit dem Vorratsdruckeingang oder mit dem Tankausgang verbindbar.

Bei dieser zweiten Variante des erfindungsgemäßen Anhängersteuerventils ist zur Lösung der gestellten Aufgabe vorgesehen, dass die Ventilanordnung ein Druckbegrenzungsventil und ein Abschaltventil aufweist, dass das Druckbegrenzungsventil und das Abschaltventil seriell hintereinander angeordnet sind, wobei das Abschaltventil dem Druckbegrenzungsventil strömungstechnisch vorgeschaltet angeordnet ist, dass der Ausgangsdruck der Ventilanordnung mittels des Druckbegrenzungsventils auf den Zusatzdruck absenkbar ist, und dass das Abschaltventil als ein 3/2-Wege-Magnetschalt-ventil ausgebildet ist, über welches der Zusatzdruckausgang in dessen unbestromten Zustand mit dem Tankausgang und in dessen bestromten Zustand mit dem Vorratsdruckeingang verbunden ist.

Durch die Verwendung des Druckbegrenzungsventils und des Abschaltventils ist die Ventilanordnung mit den Merkmalen der Erfindung im Vergleich zu einem Proportionalmagnetventil einfacher steuerbar und weist eine geringere Störungsanfälligkeit auf. Mittels des Druckbegrenzungsventils wird der eingangsseitig anliegende Vorratsdruck selbsttätig, also ohne eine aktive Ansteuerung, auf den Zusatzdruck abgesenkt. Lediglich das Abschaltventil muss aktiv angesteuert beziehungsweise über ein Steuergerät bestromt werden, wenn, je nach Anordnung der Ventile, der Zusatzdruck oder der Vorratsdruck an den Zusatzdruckausgang S oder das Druckbegrenzungsventil weitergeleitet werden soll. Im unbestromten Zustand des Abschaltventils ist der Zusatzdruckausgang S belüftet beziehungsweise drucklos, wodurch das Anhängefahrzeug automatisch abgebremst wird.

Zur Erfassung des am Zusatzdruckausgang S anliegenden Zusatzdruckes ist vorteilhaft ein elektrohydraulischer Drucksensor oder ein elektrohydraulischer Druckschalter innerhalb oder außerhalb des Anhängersteuerventils nahe des Zusatzdruckausgangs S an die Zusatzleitung angeschlossen ist. Anhand des Drucksignals des Drucksensors oder des Schaltsignals des Druckschalters, welcher bei einem geringfügig unterhalb des vorgesehenen Zusatzdruckes liegenden Druck betätigt wird, ist erkennbar, ob bei bestromtem Abschaltventil der vorgesehene Zusatzdruck am Zusatzdruckausgang S anliegt oder nicht erreicht wird. Wenn der am Zusatzdruckausgang S anliegende Druck zu niedrig ist, wird von einer Leckage in der Zusatzleitung oder von einer Störung in der Bremsanlage des Anhängefahrzeugs ausgegangen, welches dann zu einer Abschaltung zumindest des Abschaltventils und damit zur Notbremsung des Anhängefahrzeugs führt.

Das Bremssteuerventil ist bevorzugt als ein 3/3-Wege-Proportionalmagnetventil oder als ein 3/2-Wege-Proportionalmagnetventil mit einer ventilfederseitigen Rückführung des eingesteuerten Bremsdruckes auf den Ventilkolben ausgebildet ist, über welches der Bremsdruckausgang im unbestromten Zustand ungedrosselt mit dem Tankausgang und im maximal bestromten Zustand ungedrosselt mit dem Vorratsdruckeingang verbunden ist. Aufgrund der Rückführung des Bremsdruckes auf den Ventilkolben ist das Bremssteuerventil allein über einen elektrischen Steuerstrom anhand einer in dem Steuergerät abgespeicherten Kennlinie steuerbar.

Dennoch kann zur Erfassung des am Bremsdruckausgang C anliegenden Bremsdruckes ein elektrohydraulischer Drucksensor innerhalb oder außerhalb des Anhängersteuerventils nahe dem Bremsdruckausgang C an die Bremsleitung angeschlossen sein. Dieser Drucksensor dient jedoch nur zur Erkennung einer Leckage in der Bremsleitung oder einer Störung in der Bremsanlage des Anhängefahrzeugs, welches zu einer Abschaltung des Bremssteuerventils sowie des Abschaltventils und damit zur Notbremsung des Anhängefahrzeugs führt.

Ein unterschiedlich hoher, am Vorratsdruckeingang P anliegender Vorratsdruck kann zu geringen Veränderungen der Steuerungskennlinie des Bremssteuerventils führen. Daher ist es gemäß einer anderen Weiterbildung der Erfindung vorteilhaft, wenn zur Erfassung des am Vorratsdruckeingang P anliegenden Vorratsdruckes ein elektrohydraulischer Drucksensor innerhalb oder außerhalb des Anhängersteuerventils nahe des Vorratsdruckeingangs P an die Vorratsleitung angeschlossen ist. Somit kann abhängig vom aktuellen Vorratsdruck jeweils die optimale Kennlinie zur Steuerung des Bremssteuerventils ausgewählt und verwendet werden.

Zur Erfassung des Ankoppelzustands eines Anhängefahrzeugs, also zur Erkennung, ob ein Anhängefahrzeug angekoppelt ist oder nicht, ist gemäß einer anderen Ausgestaltung eine elektrische Signalleitung unmittelbar oder über das Anhängersteuerventil an ein zugeordnetes elektronisches Steuergerät angeschlossen. Diese Signalleitung ist üblicherweise an die 7-polige oder 13-polige Steckdose für den Anschlussstecker des Anhängefahrzeugs angeschlossen. Wird bei der Inbetriebnahme des Zugfahrzeugs ein angekoppeltes Anhängefahrzeugs erkannt, so kann dies zur automatischen Befüllung eines Druckspeichers des Anhängefahrzeugs genutzt werden, indem das Bremssteuerventil für einige Sekunden maximal bestromt wird und damit Drucköl in die Bremsleitung des Anhängefahrzeugs gefördert wird. Dagegen werden das Abschaltventil und das Bremssteuerventil bei der Erkennung, dass kein Anhängefahrzeug angekoppelt ist, nicht geschaltet werden, sodass der Zusatzdruckausgang und der Bremsdruckausgang dann drucklos bleiben.

Um die Aussteuerung eines Bremsdruckes für das Anhängefahrzeug auch bei einem Defekt des Bremssteuerventils oder dessen Steuerung zu ermöglichen, sind vorteilhaft ein an eine Bremsleitung des Zugfahrzeugs angeschlossener Bremsdruckeingang PB, PB' und ein redundanter Steuerungszweig mit einem druckgesteuerten Relaisventil zur bremsdruckgesteuerten Einsteuerung eines Bremsdruckes und einem Redundanzventil zur Aktivierung sowie Deaktivierung des redundanten Steuerungszweiges vorgesehen. Mittels des Redundanzventils wird das Relaisventil bedarfsweise aktiviert, wodurch der am Bremsdruckausgang C anliegende Bremsdruck anstelle mittels einer elektronischen Steuerung über das Bremssteuerventil bremsdruckgesteuert über das Relaisventil eingestellt wird.

Hierzu ist vorgesehen, dass das Relaisventil an den Vorratsdruckeingang P, an den Tankausgang T und über ein Wechselventil an den Bremsdruckausgang C angeschlossen sowie mit einem Steuereingang versehen ist. Das Redundanzventil ist vorzugsweise als ein 3/2-Wege-Magnetschaltventil ausgebildet ist, mittels dem im unbestromten Zustand der Steuereingang des Relaisventils mit dem Bremsdruckeingang PB, PB' und im bestromten Zustand, je nach Ausführung der Bremsanlage des Zugfahrzeugs (pneumatisch oder hydraulisch), mit einem Entlüftungsausgang oder mit dem Tankausgang T verbunden ist.

Bei einer dem Druckbegrenzungsventil vorgeschalteten Anordnung des Abschaltventils kann das Relaisventils anstelle eines Anschlusses an den Vorratsdruckeingang P auch über eine Anschlussleitung an die Verbindungsleitung zwischen dem Abschaltventil und dem Druckbegrenzungsventil angeschlossen sein, in der bei bestromtem Abschaltventil der Vorratsdruck anliegt. Somit wird durch eine Abschaltung des Abschaltventils sowohl der Zusatzdruckausgang S als auch der Vorratseingang des Relaisventils über das Abschaltventil belüftet und dadurch drucklos geschaltet.

Um bei dieser Ausführungsform eine unbeabsichtigte Abschaltung des Abschaltventils und damit das Deaktivieren des redundanten Steuerungszweiges zu vermeiden, ist das Abschaltventil bevorzugt durch eine den letzten Schaltzustand beibehaltende Steuerung innerhalb des zugeordneten elektronischen Steuergerätes gegen einen störungsbedingten Ausfall abgesichert.

Alternativ dazu oder zusätzlich kann dem Abschaltventil zu diesem Zweck auch ein zweites Abschaltventil parallelgeschaltet sein, wobei die Arbeitsausgänge der beiden Abschaltventile über ein Wechselventil an die zum Druckbegrenzungsventil führende Verbindungsleitung angeschlossen sind, sodass bei einem Defekt an einem der beiden Abschaltventile die Zufuhr von unter dem Vorratsdruck stehenden Drucköl in die Verbindungsleitung über das jeweils andere Abschaltventil erfolgen kann. Aus Kostengründen ist das zweite Abschaltventil vorzugsweise baugleich mit dem ersten Abschaltventil.

Eine weitere Möglichkeit zur Vermeidung einer unbeabsichtigten Abschaltung des Abschaltventils besteht darin, dass in der Verbindungsleitung zwischen dem Abschaltventil und dem Anschluss der zu dem Relaisventil führenden Anschlussleitung ein in Richtung des Abschaltventils sperrendes, mittels eines eingesteuerten Steuerdruckes entsperrbares Rückschlagventil mit einem Steuereingang angeordnet ist, an den ein elektronisch steuerbares Vorsteuerventil angeschlossen ist. Dieses Vorsteuerventil ist als ein 3/2-Wege-Magnetschaltventil ausgebildet ist, mittels dem der Steuereingang des Rückschlagventils im unbestromten Zustand mit dem Tankausgang T verbunden ist und im bestromten Zustand mit dem Vorratsdruckeingang P verbunden ist. Durch das entsperrbare Rückschlagventil in der genannten Verbindungsleitung kann der Eingang des Druckbegrenzungsventils und der Vorratseingang des Relaisventils bei unbestromtem Abschaltventil nur durch eine aktive Ansteuerung, also durch die Bestromung des Vorsteuerventils belüftet und damit drucklos geschaltet werden.

Zumindest das Bremssteuerventil, das Druckbegrenzungsventil, das Abschaltventil, das Relaisventil, das Redundanzventil und das Wechselventil sind mittels Steckverbindungen und/oder Schraubverbindungen miteinander verbunden und bilden dadurch das Anhängersteuerventil, welches somit auf einfache Weise im Zugfahrzeug montiert und für Wartungs- und Reparaturarbeiten sowie zum Austausch demontiert werden kann. Bedarfsweise können auch die Drucksensoren und/oder der erwähnte Druckschalter über Steckverbindungen und/oder Schraubverbindungen mit den genannten Ventilen verbunden sein.

Alternativ dazu können zumindest das Bremssteuerventil, das Druckbegrenzungsventil, das Abschaltventil, das Relaisventil, das Redundanzventil und das Wechselventil zu demselben Zweck in einem gemeinsamen Ventilgehäuse angeordnet sein und dadurch das Anhängersteuerventil bilden. Auch hierbei können die Drucksensoren und/oder der Druckschalter bedarfsweise innerhalb des Ventilgehäuses oder außen an dem Ventilgehäuse angeordnet sein.

Das Anhängersteuerventil mit den Merkmalen der Erfindung wird nachstehend anhand von in der beigefügten Zeichnung dargestellten Ausführungsbeispielen näher erläutert. In der Zeichnung zeigt in schematischen Abbildungen
Fig. 1 eine Basisausführung des erfindungsgemäßen Anhängersteuerventils in einer Bremsanlage eines Zugfahrzeugs,
Fig. 2 eine dazu alternative Basisausführung des Anhängersteuerventils,
Fig. 3 eine Erweiterung des Anhängersteuerventils gemäß Fig. 1,
Fig. 4 eine dazu alternative Erweiterung des Anhängersteuerventils gemäß Fig. 1,
Fig. 5 eine Erweiterung des Anhängersteuerventils gemäß Fig. 3,
Fig. 6 eine Erweiterung des Anhängersteuerventils gemäß Fig. 2,
Fig. 7 eine erste Weiterbildung des Anhängersteuerventils gemäß Fig. 6, und
Fig. 8 eine alternative zweite Weiterbildung des Anhängersteuerventils gemäß Fig. 6.

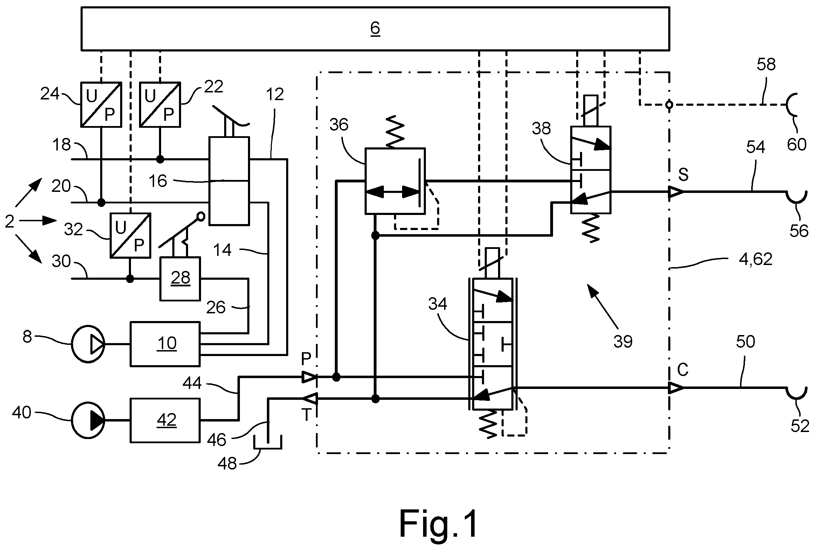

In der Fig. 1 sind eine Bremsanlage 2 eines Zugfahrzeugs, ein in dem Zugfahrzeug angeordnetes Anhängersteuerventil 4 sowie ein diesem zugeordnetes elektronisches Steuergerät 6 abgebildet. Das Anhängersteuerventil 4 dient zur Steuerung einer hydraulischen Zweileitungsbremsanlage eines angekoppelten Anhängefahrzeugs. Bei der in Fig. 1 nur ausschnittsweise abgebildeten Bremsanlage 2 des Zugfahrzeugs handelt es sich vorliegend beispielhaft um eine Druckluftbremsanlage, welche einen Kompressor 8 und eine Aufbereitungseinheit 10 aufweist. Von der Aufbereitungseinheit 10 ist eine erste pneumatische Vorratsleitung 12 für einen ersten Betriebsbremskreis sowie eine zweite pneumatische Vorratsleitung 14 für einen zweiten Betriebsbremskreis an ein Fußbremsventil 16 geführt. Mittels des Fußbremsventils 16 ist jeweils ein Bremsdruck in eine Bremsleitung 18 des ersten Betriebsbremskreises sowie in eine Bremsleitung 20 des zweiten Betriebsbremskreises einsteuerbar. Zur Messung der dort eingesteuerten Bremsdrücke ist jeweils ein als Bremswertgeber wirksamer elektropneumatischer Drucksensor 22, 24 an die Bremsleitungen 18, 20 angeschlossen und über mit gestrichelten Linien dargestellten Sensorleitungen mit dem Steuergerät 6 verbunden. Zudem ist von der Aufbereitungseinheit 10 eine weitere pneumatische Vorratsleitung 26 an ein Parkbremsventil 28 geführt, mittels dem ein Parklösedruck in eine angeschlossene Parkbremsleitung 30 einsteuerbar ist. Zur Messung des Parklösedruckes ist ein als Parkbremssensor wirksamer elektropneumatischer Drucksensor 32 an die Parkbremsleitung 30 angeschlossen und über eine Sensorleitung mit dem Steuergerät 6 verbunden.

Das Anhängersteuerventil 4 weist einen Vorratsdruckeingang P, einen Tankausgang T, einen Bremsdruckausgang C sowie einen Zusatzdruckausgang S auf und umfasst ein Bremssteuerventil 34, ein Druckbegrenzungsventil 36 und ein Abschaltventil 38. An den Vorratsdruckeingang P ist eine hydraulische Vorratsleitung 44 angeschlossen, die von einer Ölpumpe 40 und einer dieser nachgeordneten Aufbereitungseinheit 42 gespeist wird. An den Tankausgang T ist eine Rücklaufleitung 46 angeschlossen, welche in einen Sammelbehälter 48 führt. An den Bremsdruckausgang C ist eine Bremsleitung 50 angeschlossen, die zu einer Bremskupplung 52 für den Anschluss einer anhängerseitigen Bremsleitung führt. An den Zusatzdruckausgang S ist eine Zusatzleitung 54 angeschlossen, die zu einer Zusatzkupplung 56 für den Anschluss einer anhängerseitigen Zusatzleitung führt. Zudem ist eine Signalleitung 58 von dem Steuergerät 6 über das Anhängersteuerventil 4 an eine Steckerbuchse 60 für den Anschluss einer anhängerseitigen Signalleitung geführt. Das Anhängersteuerventil 4 kann dadurch gebildet sein, dass die erwähnten Ventile 34, 36, 38 über Steckverbindungen und/oder Schraubverbindungen mechanisch und hydraulisch miteinander verbunden sind, oder in einem gemeinsamen Ventilgehäuse 62 angeordnet sind.

Das Bremssteuerventil 34 ist als ein 3/3-Wege-Proportionalmagnetventil mit einer ventilfederseitigen Rückführung des eingesteuerten Bremsdruckes auf den Ventilkolben ausgebildet und über eine elektrische Steuerleitung mit dem Steuergerät 6 verbunden. Hier sei erwähnt, dass alle elektrischen Steuerleitungen mit gestrichelter Linie dargestellt sind. Das Bremssteuerventil 34 dient zur Einsteuerung eines Bremsdruckes an dem Bremsdruckausgang C zwischen 0 Pa und 150 × 10⁵ Pa in Abhängigkeit von einem mittels mindestens einem der Drucksensoren 22, 24 gemessenen Bremswert. Über das Bremssteuerventil 34 ist der Bremsdruckausgang C im unbestromten Zustand ungedrosselt mit dem Tankausgang T (0 Pa) und im maximal bestromten Zustand ungedrosselt mit dem Vorratsdruckeingang P bei einem dortigen Druck von beispielsweise 150 × 10⁵ Pa verbunden.

Bei der Inbetriebnahme des Zugfahrzeugs kann der Bremsdruckausgang C durch eine maximale Bestromung des Bremssteuerventils 34 für einige Sekunden mit dem maximalen Bremsdruck (150 × 10⁵ Pa) beaufschlagt werden, um einen Druckspeicher des Anhängefahrzeugs mit Hydrauliköl unter hohem Druck zu befüllen, sofern zuvor über die Signalleitung 58 (bei angeschlossenem Stecker des Anhängefahrzeugs) ein angekoppeltes Anhängefahrzeug erkannt wurde.

Mittels des Druckbegrenzungsventils 36 wird der eingangsseitig anliegende Vorratsdruck ausgangsseitig auf einen konstanten Zusatzdruck zwischen 15 × 10⁵ Pa bis 35 × 10⁵ Pa abgesenkt. Das Abschaltventil 38, welches vorliegend dem Druckbegrenzungsventil 36 pneumatisch nachgeschaltet angeordnet ist, ist als ein 3/2-Wege-Magnetschaltventil ausgebildet und über eine elektrische Steuerleitung mit dem Steuergerät 6 verbunden. Mittels dieses Abschaltventils 38 ist der Zusatzdruckausgang S im unbestromten Zustand mit dem Tankausgang T (0 Pa) und im bestromten Zustand mit dem Arbeitsausgang des Druckbegrenzungsventils 36 verbunden, welcher einen Hydraulikdruck von 15 × 10⁵ Pa bis 35 × 10⁵ Pa aufweisen kann.

Nach der Inbetriebnahme des betreffenden Zugfahrzeugs wird der Zusatzdruckausgang S mit dem Lösen der Parkbremse, welches über den Parkbremssensor 32 erfasst wird, durch die Bestromung des Abschaltventils 38 mit dem vorgesehenen Zusatzdruck (15 × 10⁵ Pa bis 35 × 10⁵ Pa) beaufschlagt, sofern zuvor über die Signalleitung 58 ein angekoppeltes Anhängefahrzeug erkannt wurde. Wenn nachfolgend eine Störung in der Bremsanlage des Anhängefahrzeugs 4 festgestellt oder im Zugfahrzeug ein Notausschalter betätigt oder durch die Betätigung des Parkbremsventils 28 die Parkbremse des Zugfahrzeugs eingelegt wird, so wird der Zusatzdruckausgang S durch die Abschaltung des Abschaltventils 38 drucklos geschaltet und dadurch eine Notbremsung oder Hilfsbremsung des Anhängefahrzeugs ausgelöst. Die beschriebene Basisausführung des Anhängersteuerventils 4 ist vorteilhaft ohne einen an die Bremsleitung 50 Und/oder an die Zusatzleitung 54 angeschlossenen Drucksensoren wirksam.

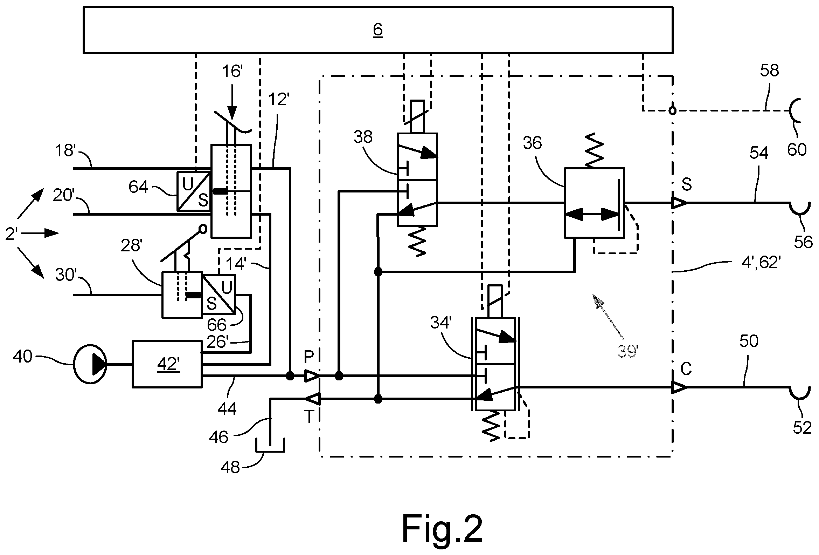

Das in Fig. 2 abgebildete Anhängersteuerventil 4' unterscheidet sich bei gleicher Funktionalität von dem Anhängersteuerventil 4 gemäß Fig. 1 im Wesentlichen dadurch, dass bei deren Ventilanordnung 39' das Abschaltventil 38 dem Druckbegrenzungsventil 36 nun hydraulisch nachgeschaltet angeordnet ist. Dadurch wird nun der Eingang des Druckbegrenzungsventils 36 über das Abschaltventil 38 im unbestromten Zustand mit dem Tankausgang T (0 Pa) und im bestromten Zustand mit dem Vorratsdruckeingang P (150 × 10⁵ Pa) verbunden.

Das Bremssteuerventil 34' ist in diesem Ausführungsbeispiel als ein 3/2-Wege-Proportionalmagnetventil mit einer ventilfederseitigen Rückführung des eingesteuerten Bremsdruckes auf den Ventilkolben ausgebildet, welches von dem Steuergerät 6 gesteuert wird. Dabei ist der Bremsdruckausgang C des Anhängersteuerventils 4' im unbestromten Zustand des Bremssteuerventils 34' ungedrosselt das Bremssteuerventil 34' mit dem Tankausgang T und im maximal bestromten Zustand ungedrosselt mit dem hydraulischen Vorratsdruckeingang P verbunden.

Zudem ist bei dem Ausführungsbeispiel gemäß Fig. 2 die Bremsanlage 2' des Zugfahrzeugs als eine hydraulische Bremsanlage ausgebildet. Demzufolge sind die betreffenden Vorratsleitungen 12', 14', 26' nun an die der Ölpumpe 40 nachgeschaltete Aufbereitungseinheit 42' sowie der Vorratsdruckeingang P des Anhängersteuerventils 4' an die Vorratsleitung 12' des ersten Betriebsbremskreises angeschlossen. Als Bremswertgeber ist hierbei beispielhaft ein Stellwegsensor 64 vorgesehen, welcher an dem Fußbremsventil 16' angeordnet ist und über eine Sensorleitung mit dem Steuergerät 6 verbunden ist. Der Schaltzustand des Parkbremsventils 28' wird nun über einen als Parkbremssensor wirksamen Schaltsensor 66 erfasst, welcher über eine Sensorleitung mit dem Steuergerät 6 verbunden ist.

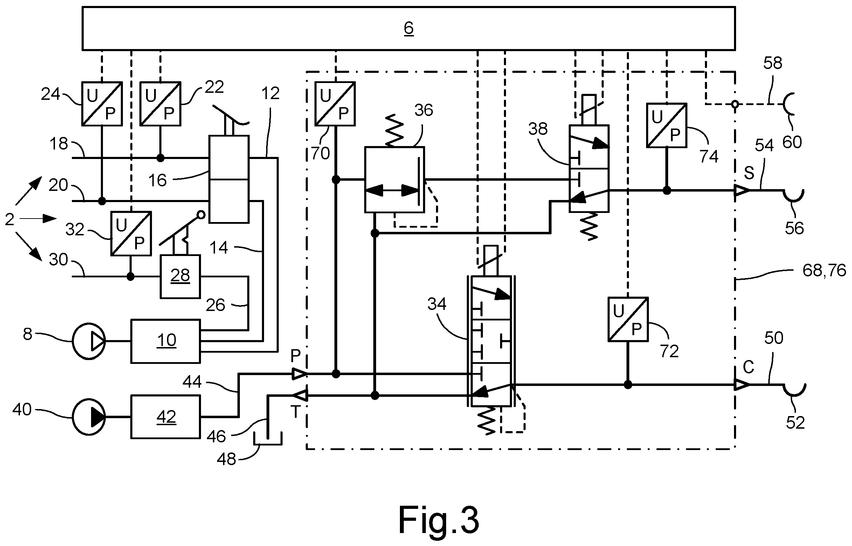

In Fig. 3 ist ein die Merkmale der Erfindung aufweisendes Anhängersteuerventil 68 abgebildet, welches im Vergleich mit dem Anhängersteuerventil 4 gemäß Fig. 1 mittels drei elektrohydraulische Drucksensoren 70, 72, 74 erweitert ist. Der erste Drucksensor 70 ist an die schon erwähnte hydraulische Vorratsleitung 44 angeschlossen und über eine Sensorleitung mit dem Steuergerät 6 verbunden. Mit der Messung des am Vorratsdruckeingang P anliegenden Vorratsdruckes ist eine genauere Einstellung des am Bremsdruckausgang C anliegenden Bremsdruckes über das Bremssteuerventil 34 möglich, da sich abhängig von dem eingangsseitigen Vorratsdruck geringfügige Änderungen der im Steuergerät 6 abgespeicherten Steuerungskennlinie für das Bremssteuerventil 34 ergeben können. Somit kann abhängig vom aktuellen Vorratsdruck jeweils die optimale Kennlinie zur Steuerung des Bremssteuerventils 34 ausgewählt und verwendet werden.

Der zweite Drucksensor 72 ist an die Bremsleitung 50 angeschlossen und über eine Sensorleitung mit dem Steuergerät 6 verbunden. Mit der Messung des am Bremsdruckausgang C anliegenden Bremsdruckes kann eine Abweichung von dem über das Bremssteuerventil 34 einzustellenden Bremsdruckes festgestellt werden, welche auf einen Defekt in der anhängerseitigen Bremsanlage oder auf eine Leckage in der Bremsleitung 50 schließen lässt. Demzufolge kann ein optisches oder akustisches Warnsignal in der Fahrerkabine des Zugfahrzeugs ausgegeben werden und/oder durch eine Abschaltung des Bremssteuerventils 34 und des Abschaltventils 38 eine Notbremsung des Anhängefahrzeugs ausgelöst sowie das Entweichen von Drucköl in die Umgebung verhindert werden.

Der dritte Drucksensor 74 ist an die Zusatzleitung 54 angeschlossen und über eine Sensorleitung mit dem Steuergerät 6 verbunden. Mit der Messung des am Zusatzdruckausgang S anliegenden Zusatzdruckes kann eine Abweichung von dem über das Druckbegrenzungsventil 36 einzustellenden Zusatzdruckes festgestellt werden, welche auf einen Defekt in der anhängerseitigen Bremsanlage oder auf eine Leckage in der Zusatzleitung 58 hindeutet. Demzufolge kann ein optisches oder akustisches Warnsignal in der Fahrerkabine des Zugfahrzeugs ausgegeben werden und/oder durch eine Abschaltung zumindest des Abschaltventils 38 eine Notbremsung des Anhängefahrzeugs ausgelöst und das Entweichen von Drucköl in die Umgebung verhindert werden.

In der Abbildung der Fig. 3 sind die drei genannten Drucksensoren 70, 72, 74 innerhalb des Anhängersteuerventils 68 angeordnet. Hierdurch soll veranschaulicht werden, dass die Drucksensoren 70, 72, 74 über Steckverbindungen und/oder Schraubverbindungen mit den betreffenden Leitungen oder Ventilen 34, 36, 38 verbunden sein können, und somit das Anhängersteuerventil 68 bilden können. Zudem wird verdeutlicht, dass diese Drucksensoren 70, 72, 74 zusammen mit den betreffenden Ventilen 34, 36, 38 und Leitungen in einem gemeinsamen Ventilgehäuse 76 angeordnet sein können. Es ist jedoch auch möglich, dass die Drucksensoren 70, 72, 74 außerhalb des Anhängersteuerventils 68 an die jeweils betroffene Druckleitung 44, 50, 54 angeschlossen sind.

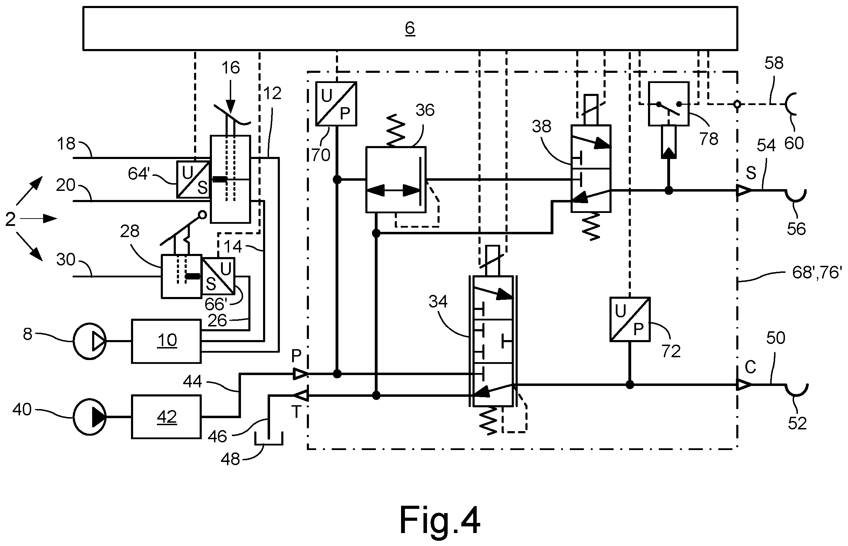

Die in Fig. 4 abgebildete weitere Ausführungsform eines die Merkmale der Erfindung aufweisenden Anhängersteuerventils 68' unterscheidet sich von dem Anhängersteuerventil 68 gemäß Fig. 3 dadurch, dass anstelle des Drucksensors 74 zwischen dem Abschaltventil 38 und dem Zusatzdruckausgang S nun ein elektrohydraulischer Druckschalter 78 an die Zusatzleitung 54 angeschlossen und über eine Signalleitung mit dem Steuergerät 6 verbunden ist. Anhand des Schaltsignals des Druckschalters 78, der bei einem geringfügig unterhalb des vorgesehenen Zusatzdruckes liegenden Druck betätigt wird, ist durch das Steuergerät 6 erkennbar, ob bei bestromtem Abschaltventil 38 der vorgesehene Zusatzdruck am Zusatzdruckausgang S anliegt oder nicht erreicht wird. Wenn der am Zusatzdruckausgang S anliegende Druck zu niedrig ist, wird von einer Störung in der Bremsanlage des Anhängefahrzeugs oder einer Leckage in der Zusatzleitung 58 ausgegangen, welches zu einer Abschaltung zumindest des Abschaltventils 38 und damit zur Notbremsung des Anhängefahrzeugs führt. In Fig. 4 ist zudem verdeutlicht, dass auch bei einer als Druckluftbremsanlage ausgebildeten Bremsanlage 2 des Zugfahrzeugs anstelle von den in Fig. 1 und Fig. 3 angeordneten Drucksensoren 22, 24, 32 ein am Fußbremsventil 16 angeordneter Stellwegsensor 64' als Bremswertgeber und ein am Parkbremsventil 28 angeordneter Schaltsensor 66' als Parkbremssensor verwendet werden kann.

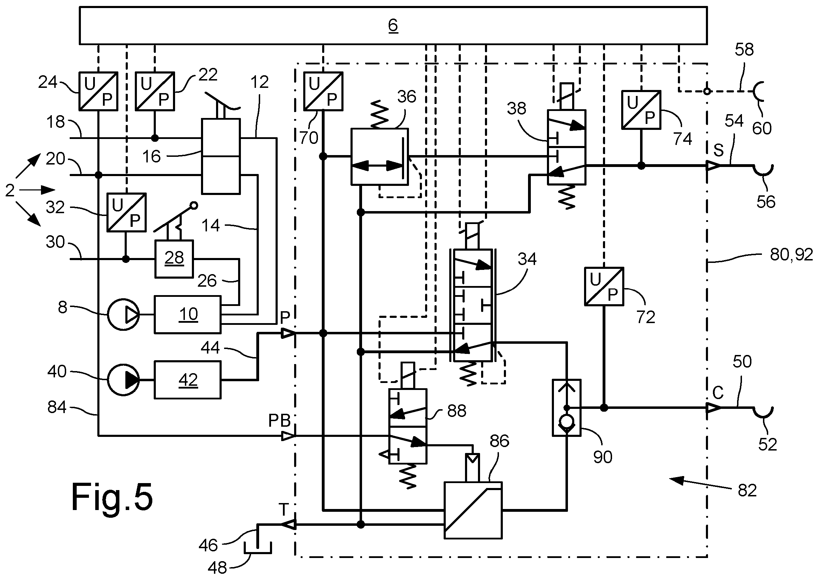

In Fig. 5 ist ein Anhängersteuerventil 80 abgebildet, welches im Vergleich mit dem Anhängersteuerventil gemäß Fig. 3 mittels eines pneumatischen Bremsdruckeingangs PB und einen redundanten Steuerungszweig 82 erweitert ist. Der pneumatische Bremsdruckeingang PB ist über eine Anschlussleitung 84 an die Bremsleitung 20 des zweiten Bremskreises des Zugfahrzeugs angeschlossen. Der redundante Steuerungszweig 82 umfasst ein pneumatisch druckgesteuertes Relaisventil 86, ein Redundanzventil 88 und ein Wechselventil 90. Das Relaisventil 86 ist an den Vorratsdruckeingang P, den Tankausgang T und über das Wechselventil 90. An dem Wechselventil 90 sind auch der Arbeitsausgang des Bremssteuerventils 34 und der Bremsdruckausgang C angeschlossen. Der Steuereingang des Relaisventils 86 ist über das Redundanzventil 88 mit dem Bremsdruckeingang PB verbindbar. Das Redundanzventil 88 ist als ein 3/2-Wege-Magnetschaltventil ausgebildet und über eine elektrische Steuerleitung mit dem Steuergerät 6 verbunden.

Über das Redundanzventil 88 ist der Steuereingang des Relaisventils 86 im unbestromten Zustand mit dem Bremsdruckeingang PB und im bestromten Zustand mit einem Entlüftungsausgang verbunden. Somit sind das Relaisventil 86 und damit der redundante Steuerungszweig 82 im unbestromten Zustand des Redundanzventils 88 aktiviert sowie im bestromten Zustand des Redundanzventils 88 deaktiviert. Bei einem Ausfall des Steuergerätes 6 wird somit automatisch das Bremssteuerventil 34 deaktiviert und der redundante Steuerungszweig 82 aktiviert, wodurch im Fahrbetrieb die Einsteuerung eines Bremsdruckes an den Bremsdruckausgang C unter allen Umständen sichergestellt ist.

Das Anhängersteuerventil 80 kann dadurch gebildet sein, dass die erwähnten Ventile 34, 36, 38, 86, 88, 90 über Steck- und/oder Schraubverbindungen miteinander verbunden sind oder in einem gemeinsamen Ventilgehäuse 92 angeordnet sind. Vorliegend sind auch die drei genannten Drucksensoren 70, 72, 74 innerhalb des Anhängersteuerventils 80 angeordnet. Hierdurch wird veranschaulicht, dass die Drucksensoren 70, 72, 74 über Steck- und/oder Schraubverbindungen mit den betreffenden Ventilen 34, 36, 38, 86, 88, 90 verbunden sein und somit das Anhängersteuerventil 80 bilden können, oder dass die Drucksensoren 70, 72, 74 zusammen mit den betreffenden Ventilen 34, 36, 38, 86, 88, 90 in einem gemeinsamen Ventilgehäuse 92 angeordnet sein können. Es ist jedoch auch möglich, dass die Drucksensoren 70, 72, 74 außerhalb des Anhängersteuerventils 80 an die jeweils zugeordnete Druckleitung 44, 50, 54 angeschlossen sind.

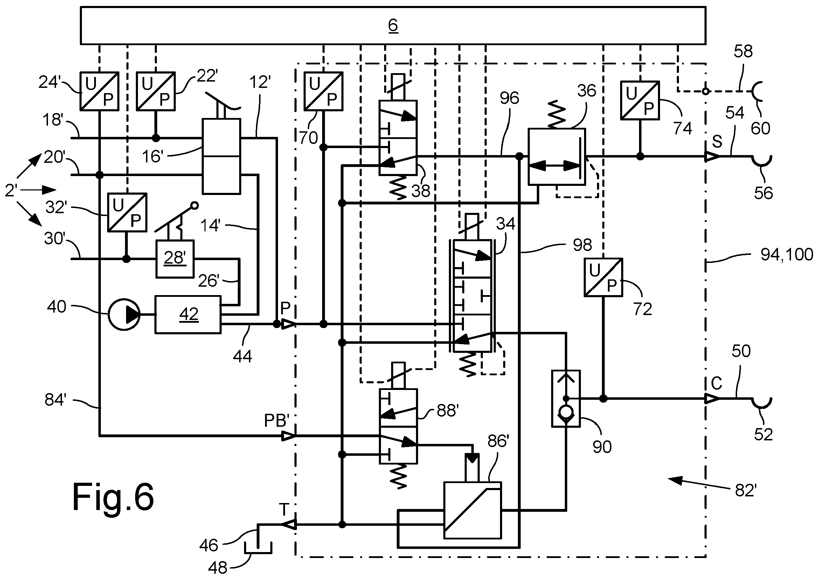

In Fig. 6 ist ein erfindungsgemäßes Anhängersteuerventil 94 abgebildet, welches beispielhaft weitgehend auf dem Anhängersteuerventil 4' gemäß Fig. 2 basiert, jedoch wie bei den Ausführungsformen gemäß den Figuren 3, 4 und 5 mit Drucksensoren 70, 72, 74 versehen ist sowie einen hydraulischen Bremsdruckeingang PB' und einen redundanten Steuerungszweig 82' aufweist. Zudem ist die hydraulische Bremsanlage 2' des Zugfahrzeugs beispielhaft mit Drucksensoren 22', 24', 32' zur Messung der Bremsdrücke in den zugeordneten Bremsleitungen 18', 20' und des Bremslösedruckes in der Parkbremsleitung 30' ausgerüstet.

Der Bremsdruckeingang PB' ist über eine Anschlussleitung 84' an die Bremsleitung 20' des zweiten hydraulischen Bremskreises des Zugfahrzeugs angeschlossen. Der redundante Steuerungszweig 82' ist ähnlich demjenigen gemäß Fig. 5 aufgebaut und umfasst ein hydraulisch druckgesteuertes Relaisventil 86', ein Redundanzventil 88' und ein Wechselventil 90. Der Vorratseingang des Relaisventils 86' ist jedoch anstelle eines Anschlusses an den Vorratsdruckeingang P nun über eine Anschlussleitung 98 an eine Verbindungsleitung 96 zwischen dem Abschaltventil 38 und dem Druckbegrenzungsventil 36 angeschlossen. Zudem ist das Relaisventil 86' an den Tankausgang T und über das Wechselventil 90 an den Bremsdruckausgang C angeschlossen. Der Steuereingang des Relaisventils 86' ist über das Redundanzventil 88' mit dem Bremsdruckeingang PB' verbindbar. Das Redundanzventil 88' ist als ein 3/2-Wege-Magnetschalt-ventil ausgebildet und über eine elektrische Steuerleitung mit dem Steuergerät 6 verbunden. Über das Redundanzventil 88' ist der Steuereingang des Relaisventils 86' im unbestromten Zustand mit dem Bremsdruckeingang PB' und im bestromten Zustand mit dem Tankausgang T verbunden.

Da der Vorratseingang des Relaisventils 86' nur bei bestromtem Abschaltventil 38 über die Verbindungsleitung 96 und die Anschlussleitung 98 mit dem Vorratsdruckeingang P verbunden ist und dann unter dem Vorratsdruck steht, sind besondere Maßnahmen vorgesehen, um eine unbeabsichtigte Abschaltung des Abschaltventils 38 und damit eine Deaktivierung des redundanten Steuerungszweiges 82' zu vermeiden. So ist vorliegend vorgesehen, dass das Abschaltventil 38 durch eine den letzten Schaltzustand beibehaltende Steuerung innerhalb des elektronischen Steuergerätes 6 gegen einen störungsbedingten Ausfall abgesichert ist.

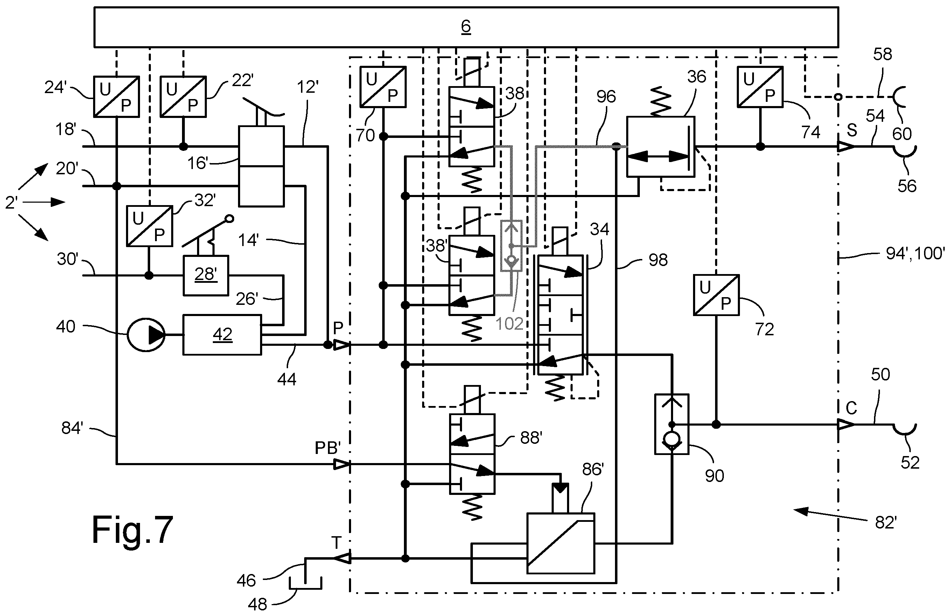

In dem erfindungsgemäßen Anhängersteuerventil 94' gemäß Fig. 7 ist bei sonst gleicher Ausführung zu diesem Zweck alternativ dazu oder zusätzlich ein zweites Abschaltventil 38' vorgesehen, welches zu dem ersten Abschaltventil 38 parallelgeschaltet angeordnet und vorzugsweise baugleich mit diesem ist. Die Arbeitsausgänge der beiden Abschaltventile 38, 38' sind über ein Wechselventil 102 an die zu dem Druckbegrenzungsventil 36 führende Verbindungsleitung 96 angeschlossen. Bei einem Defekt an einem der beiden Abschaltventile 38, 38' kann somit die Zufuhr von unter dem Vorratsdruck stehenden Drucköl in die Verbindungsleitung 96 über das jeweils andere Abschaltventil (38 oder 38') erfolgen.

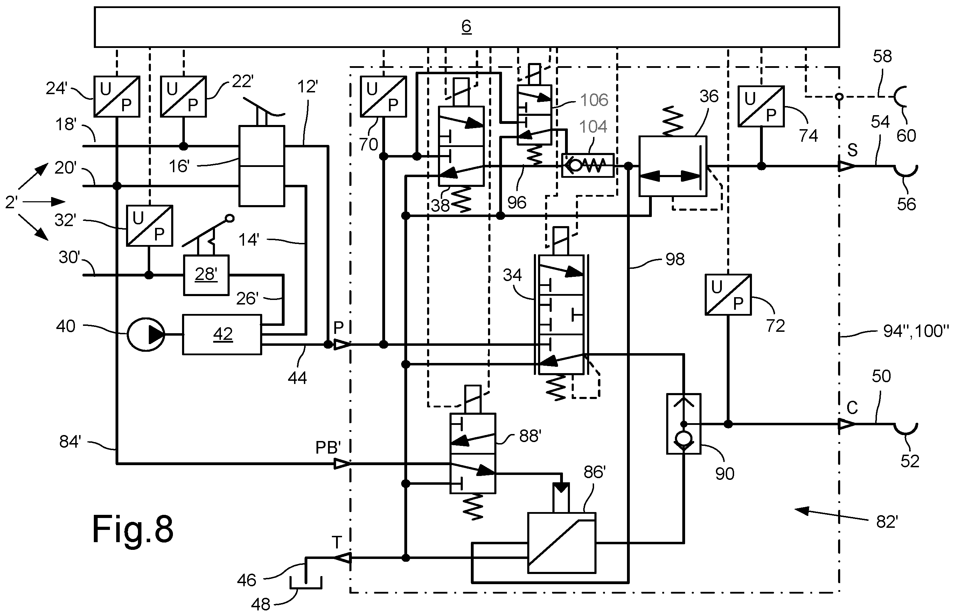

In dem erfindungsgemäßen Anhängersteuerventil 94" gemäß Fig. 8 ist bei sonst gleicher Ausführung wie bei dem Anhängersteuerventil 94 gemäß Fig. 6 eine weitere Möglichkeit zur Vermeidung einer unbeabsichtigten Abschaltung des Abschaltventils 38 dargestellt. Diese besteht darin, dass in der Verbindungsleitung 96 zwischen dem Abschaltventil 38 und dem Anschluss der zu dem Relaisventil 86' führenden Anschlussleitung 98 ein in Richtung des Abschaltventils 38 sperrendes, mittels eines eingesteuerten Steuerdruckes entsperrbares Rückschlagventil 104 mit einem Steuereingang angeordnet ist, an den ein elektronisch steuerbares Vorsteuerventil 106 angeschlossen ist. Das Vorsteuerventil 106 ist als ein 3/2-Wege-Magnetschaltventil ausgebildet, mittels dem der Steuereingang des Rückschlagventils 104 im unbestromten Zustand mit dem Tankausgang T verbunden ist, und im bestromten Zustand mit dem Vorratsdruckeingang P verbunden ist. Durch das entsperrbare Rückschlagventil 104 in der Verbindungsleitung 96 kann der Eingang des Druckbegrenzungsventils 36 und der Vorratseingang des Relaisventils 96' bei unbestromtem Abschaltventil 38 nur durch eine aktive Ansteuerung, also die Bestromung des Vorsteuerventils 106 belüftet und damit drucklos geschaltet werden.

Die geschilderten Anhängersteuerventile 94, 94', 94" können jeweils dadurch gebildet sein, dass die Ventile 34, 36, 38, 86', 88', 90 beziehungsweise zusätzlich die Ventile 38' oder 102, 104 über Steckverbindungen und/oder Schraubverbindungen miteinander verbunden sind oder in einem gemeinsamen Ventilgehäuse 100, 100', 100" angeordnet sind. Vorliegend sind auch die drei Drucksensoren 70, 72, 74 innerhalb des jeweiligen Anhängersteuerventils 94, 94', 94" angeordnet. Hierdurch wird veranschaulicht, dass diese Drucksensoren 70, 72, 74 über Steckverbindungen und/oder Schraubverbindungen mit den zugeordneten Ventilen 34, 36, 38, 86', 90 verbunden und somit das jeweilige Anhängersteuerventil 94, 94', 94" bilden können, oder dass die Drucksensoren 70, 72, 74 zusammen mit den zugeordneten Ventilen 34, 36, 38, 86', 88', 90 beziehungsweise zusätzlich mit den Ventilen 38' oder 102, 104 in jeweils einem gemeinsamen Ventilgehäuse 100, 100', 100" angeordnet sein können. Es ist jedoch auch möglich, dass die genannten Drucksensoren 70, 72, 74 außerhalb des jeweiligen Anhängersteuerventils 100, 100', 100" an die jeweils zugeordnete Druckleitung 12', 50, 54 angeschlossen sind.

### Bezugszeichenliste (Bestandteil der Beschreibung)

- 2: Bremsanlage, Druckluftbremsanlage
- 2': Bremsanlage (hydraulisch)
- 4, 4': Anhängersteuerventil (erste bzw. zweite Ausführungsform)
- 6: Elektronisches Steuergerät
- 8: Kompressor
- 10: Aufbereitungseinheit
- 12, 12': Erste pneumatische Vorratsleitung
- 14, 14': Zweite pneumatische Vorratsleitung
- 16, 16': Fußbremsventil (erste bzw. zweite Ausführungsform)
- 18, 18': Bremsleitung des ersten Betriebsbremskreises
- 20, 20': Bremsleitung des zweiten Betriebsbremskreises
- 22, 22': Drucksensor an der Bremsleitung 18, 18', Bremswertgeber
- 24, 24': Drucksensor an der Bremsleitung 20, 20', Bremswertgeber
- 26, 26': Weitere pneumatische Vorratsleitung
- 28, 28': Parkbremsventil (erste bzw. zweite Ausführungsform)
- 30, 30': Parkbremsleitung
- 32, 32': Drucksensor an der Parkbremsleitung 30, 30', Parkbremssensor
- 34: Bremssteuerventil (ausgebildet als 3/3-Wege-Proportionalmagnetventil)
- 34': Bremssteuerventil, (ausgebildet als 3/2-Wege-Proportionalmagnetventil)
- 36: Druckbegrenzungsventil
- 38: Erstes Abschaltventil, 3/2-Wege-Magnetschaltventil
- 38': Zweites Abschaltventil, 3/2-Wege-Magnetschaltventil
- 39: Ventilanordnung (erste Ausführungsform)
- 39': Ventilanordnung (zweite Ausführungsform)
- 40: Ölpumpe
- 42, 42': Aufbereitungseinheit (erste bzw. zweite Ausführungsform)
- 44: Hydraulische Vorratsleitung
- 46: Rücklaufleitung
- 48: Sammelbehälter
- 50: Bremsleitung
- 52: Bremskupplung
- 54: Zusatzleitung
- 56: Zusatzkupplung
- 58: Signalleitung
- 60: Steckerbuchse
- 62, 62': Ventilgehäuse (erste bzw. zweite Ausführungsform)
- 64, 64': Stellwegsensor, Bremswertgeber (erste bzw. zweite Ausführungsform)
- 66, 66': Schaltsensor, Parkbremssensor (erste bzw. zweite Ausführungsform)
- 68: Anhängersteuerventil (dritte Ausführungsform)
- 68': Anhängersteuerventil (vierte Ausführungsform)
- 70: Drucksensor
- 72: Drucksensor
- 74: Drucksensor
- 76, 76': Ventilgehäuse (dritte bzw. vierte Ausführungsform)
- 78: Druckschalter
- 80: Anhängersteuerventil (fünfte Ausführungsform)
- 82, 82': Redundanter Steuerungszweig (erste bzw. zweite Ausführungsform)
- 84, 84': Anschlussleitung (erste bzw. zweite Ausführungsform)
- 86, 86': Relaisventil (erste bzw. zweite Ausführungsform)
- 88, 88': Redundanzventil, 3/2-Wege-Magnetschaltventil (erste bzw. zweite Ausführungsform)
- 90: Erstes Wechselventil
- 92: Ventilgehäuse (fünfte Ausführungsform)
- 94: Anhängersteuerventil (sechste Ausführungsform)
- 94': Anhängersteuerventil (siebte Ausführungsform)
- 94": Anhängersteuerventil (achte Ausführungsform)
- 96: Verbindungsleitung
- 98: Anschlussleitung
- 100: Ventilgehäuse (4. Ausführungsform)
- 100', 100": Ventilgehäuse (5. Ausführungsform)
- 102: Zweites Wechselventil
- 104: Rückschlagventil
- 106: Vorsteuerventil, 3/2-Wege-Magnetschaltventil
- C: Bremsdruckausgang
- P: Vorratsdruckeingang
- PB, PB': Bremsdruckeingang
- S: Zusatzdruckausgang
- T: Tankausgang

## Patentansprüche

1. Anhängersteuerventil (4) eines Zugfahrzeugs zur Steuerung einer hydraulischen Zweileitungsbremsanlage eines Anhängefahrzeugs, mit einem Vorratsdruckeingang (P) zum Anschluss einer hydraulischen Vorratsleitung (12', 44) des Zugfahrzeugs, mit einem Tankausgang (T) zum Anschluss einer drucklosen Rücklaufleitung (46) des Zugfahrzeugs, mit einem Bremsdruckausgang (C) zum Anschluss einer Bremsleitung (50) des Anhängefahrzeugs, und mit einem Zusatzdruckausgang (S) zum Anschluss einer Zusatzleitung (54) des Anhängefahrzeugs, bei dem der Bremsdruckausgang (C) mittels eines elektronisch steuerbaren Bremssteuerventils (34) abgestuft mit dem Vorratsdruckeingang (P) oder mit dem Tankausgang (T) verbindbar ist, und bei dem der Zusatzdruckausgang (S) über eine Ventilanordnung (39) mit mindestens einem elektronisch steuerbaren Ventil (38) entweder unter Absenkung eines Ausgangsdruckes des Vorratsdrucks auf einen Zusatzdruck mit dem Vorratsdruckeingang (P) oder mit dem Tankausgang (T) verbindbar ist, wobei die Ventilanordnung (39) ein Druckbegrenzungsventil (36) und ein Abschaltventil (38) aufweist, wobei das Druckbegrenzungsventil (36) und das Abschaltventil (38) seriell hintereinander angeordnet sind, wobei das Abschaltventil (38) dem Druckbegrenzungsventil (36) strömungstechnisch nachgeschaltet angeordnet ist, und wobei der Ausgangsdruck der Ventilanordnung (39) mittels des Druckbegrenzungsventils (36) auf den Zusatzdruck absenkbar ist, **dadurch gekennzeichnet, dass** das Abschaltventil (38) als ein 3/2-Wege-Magnetschaltventil ausgebildet ist, über welches der Zusatzdruckausgang (S) in dessen unbestromten Zustand mit dem Tankausgang (T) und in dessen bestromten Zustand mit dem Arbeitsausgang des Druckbegrenzungsventils (36) verbunden ist.

2. Anhängersteuerventil (4') eines Zugfahrzeugs zur Steuerung einer hydraulischen Zweileitungsbremsanlage eines Anhängefahrzeugs, mit einem Vorratsdruckeingang (P) zum Anschluss einer hydraulischen Vorratsleitung (12', 44) des Zugfahrzeugs, mit einem Tankausgang (T) zum Anschluss einer drucklosen Rücklaufleitung (46) des Zugfahrzeugs, mit einem Bremsdruckausgang (C) zum Anschluss einer Bremsleitung (50) des Anhängefahrzeugs, und mit einem Zusatzdruckausgang (S) zum Anschluss einer Zusatzleitung (54) des Anhängefahrzeugs, bei dem der Bremsdruckausgang (C) mittels eines elektronisch steuerbaren Bremssteuerventils (34') abgestuft mit dem Vorratsdruckeingang (P) oder mit dem Tankausgang (T) verbindbar ist, und bei dem der Zusatzdruckausgang (S) über eine Ventilanordnung (39') mit mindestens einem elektronisch steuerbaren Ventil (38, 38') entweder unter Absenkung eines Ausgangsdruckes des Vorratsdrucks auf einen Zusatzdruck mit dem Vorratsdruckeingang (P) oder mit dem Tankausgang (T) verbindbar ist, wobei die Ventilanordnung (39') ein Druckbegrenzungsventil (36) und ein Abschaltventil (38) aufweist, wobei das Druckbegrenzungsventil (36) und das Abschaltventil (38) seriell hintereinander angeordnet sind, und wobei der Ausgangsdruck der Ventilanordnung (39') mittels des Druckbegrenzungsventils (36) auf den Zusatzdruck absenkbar ist, **dadurch gekennzeichnet, dass** das Abschaltventil (38) dem Druckbegrenzungsventil (36) strömungstechnisch vorgeschaltet angeordnet ist, und dass das Abschaltventil (38) als ein 3/2-Wege-Magnetschaltventil ausgebildet ist, über welches der Zusatzdruckausgang (S) in dessen unbestromten Zustand mit dem Tankausgang (T) und in dessen bestromten Zustand mit dem Vorratsdruckeingang (P) verbunden ist.

3. Anhängersteuerventil nach einem der Ansprüche 1 oder 2, **dadurch gekennzeichnet, dass** zur Erfassung des am Zusatzdruckausgang (S) anliegenden Zusatzdruckes ein elektrohydraulischer Drucksensor (74) oder ein elektrohydraulischer Druckschalter (78) innerhalb oder außerhalb des Anhängersteuerventils (68, 68') nahe des Zusatzdruckausgangs (S) an die Zusatzleitung (54) angeschlossen ist.

4. Anhängersteuerventil nach einem der Ansprüche 1 bis 3, **dadurch gekennzeichnet, dass** das Bremssteuerventil (34, 34') als ein 3/3-Wege-Proportionalmagnetventil oder als ein 3/2-Wege-Proportionalmagnetventil mit einer ventilfederseitigen Rückführung des eingesteuerten Bremsdruckes auf den Ventilkolben ausgebildet ist, über welches der Bremsdruckausgang (C) im unbestromten Zustand ungedrosselt mit dem Tankausgang (T) und im maximal bestromten Zustand ungedrosselt mit dem Vorratsdruckeingang (P) verbunden ist.

5. Anhängersteuerventil nach einem der Ansprüche 1 bis 4, **dadurch gekennzeichnet, dass** zur Erfassung des am Bremsdruckausgang (C) anliegenden Bremsdruckes ein elektrohydraulischer Drucksensor (72) innerhalb oder außerhalb des Anhängersteuerventils (68, 68') nahe des Bremsdruckausgangs (C) an die Bremsleitung (50) angeschlossen ist.

6. Anhängersteuerventil nach einem der Ansprüche 1 bis 5, **dadurch gekennzeichnet, dass** zur Erfassung des am Vorratsdruckeingang (P) anliegenden Vorratsdruckes ein elektrohydraulischer Drucksensor (70) innerhalb oder außerhalb des Anhängersteuerventils (68, 68') nahe des Vorratsdruckeingangs (P) an die Vorratsleitung (12', 44) angeschlossen ist.

7. Anhängersteuerventil nach einem der Ansprüche 1 bis 6, **dadurch gekennzeichnet, dass** zur Erfassung des Ankoppelzustands eines Anhängefahrzeugs eine elektrische Signalleitung (58) unmittelbar oder über das Anhängersteuerventil (4, 4', 68, 68') an ein zugeordnetes elektronisches Steuergerät (6) angeschlossen ist.

8. Anhängersteuerventil nach einem der Ansprüche 1 bis 7, **dadurch gekennzeichnet, dass** ein an eine Bremsleitung (20, 20') des Zugfahrzeugs angeschlossener Bremsdruckeingang (PB, PB') und ein redundanter Steuerungszweig (82, 82') mit einem druckgesteuerten Relaisventil (86, 86') zur bremsdruckabhängigen Einsteuerung eines Bremsdruckes und einem Redundanzventil (88, 88') zur Aktivierung und Deaktivierung des redundanten Steuerungszweiges (82, 82') vorgesehen sind.

9. Anhängersteuerventil nach Anspruch 8, **dadurch gekennzeichnet, dass** das Relaisventil (86, 86') an den Vorratsdruckeingang (P), den Tankausgang (T) und über ein Wechselventil (90) an den Bremsdruckausgang (C) angeschlossen sowie mit einem Steuereingang versehen ist, und dass das Redundanzventil (88, 88') als ein 3/2-Wege-Magnetschaltventil ausgebildet ist, mittels dem im unbestromten Zustand der Steuereingang des Relaisventils (86, 86') mit dem Bremsdruckeingang (PB, PB') und im bestromten Zustand mit einem Entlüftungsausgang oder mit dem Tankausgang (T) verbunden ist.

10. Anhängersteuerventil nach Anspruch 8 oder 9, **dadurch gekennzeichnet, dass** der Vorratseingang des Relaisventils (86') bei einer dem Druckbegrenzungsventil (36) vorgeschalteten Anordnung des Abschaltventils (38) anstelle eines Anschlusses an den Vorratsdruckeingang (P) über eine Anschlussleitung (98) an die Verbindungsleitung (96) zwischen dem Abschaltventil (38) und dem Druckbegrenzungsventil (36) angeschlossen ist.

11. Anhängersteuerventil nach Anspruch 10, **dadurch gekennzeichnet, dass** das Abschaltventil (38) durch eine den letzten Schaltzustand beibehaltende Steuerung innerhalb des zugeordneten elektronischen Steuergerätes (6) gegen einen störungsbedingten Ausfall abgesichert ist.

12. Anhängersteuerventil nach Anspruch 10 oder 11, **dadurch gekennzeichnet, dass** zu dem Abschaltventil (38) ein zweites Abschaltventil (38') parallelgeschaltet angeordnet ist, dass das zweite Abschaltventil (38') baugleich wie das erste Abschaltventil (38) ausgebildet ist, und dass die Arbeitsausgänge der beiden Abschaltventile (38, 38') über ein Wechselventil (102) an die zum Druckbegrenzungsventil (36) führende Verbindungsleitung (96) angeschlossen sind.

13. Anhängersteuerventil nach Anspruch 10 oder 11, **dadurch gekennzeichnet, dass** in der Verbindungsleitung (96) zwischen dem Abschaltventil (38) und dem Anschluss der zu dem Relaisventil (86') führenden Anschlussleitung (98) ein in Richtung des Abschaltventils (38) sperrendes, mittels eines eingesteuerten Steuerdruckes entsperrbares Rückschlagventil (102) mit einem Steuereingang angeordnet ist, an den ein elektronisch steuerbares Vorsteuerventil (104) angeschlossen ist, und dass das Vorsteuerventil (104) als ein 3/2-Wege-Magnetschaltventil ausgebildet ist, mittels dem der Steuereingang des Rückschlagventils (102) im unbestromten Zustand mit dem Tankausgang (T) verbunden ist und im bestromten Zustand mit dem Vorratsdruckeingang (P) verbunden ist.

14. Anhängersteuerventil nach einem der Ansprüche 1 bis 13, **dadurch gekennzeichnet, dass** zumindest das Bremssteuerventil (34, 34'), das Druckbegrenzungsventil (36), das Abschaltventil (38, 38'), das Relaisventil (86, 86'), das Redundanzventil (88, 88') und das Wechselventil (90) mittels Steck- und/oder Schraubverbindungen miteinander verbunden sind.

15. Anhängersteuerventil nach einem der Ansprüche 1 bis 13, **dadurch gekennzeichnet, dass** zumindest das Bremssteuerventil (34, 34'), das Druckbegrenzungsventil (36), das Abschaltventil (38, 38'), das Relaisventil (86, 86'), das Redundanzventil (88, 88') und das Wechselventil (90) in einem gemeinsamen Ventilgehäuse (62, 62', 76, 76', 92, 100, 100', 100") angeordnet sind.

## Claims

1. Trailer control valve (4) of a tractor vehicle for controlling a hydraulic two-line brake system of a trailer vehicle, having a reservoir pressure input (P) for connecting a hydraulic reservoir line (12', 44) of the tractor vehicle, having a tank output (T) for connecting an unpressurized return line (46) of the tractor vehicle, having a brake pressure output (C) for connecting a brake line (50) of the trailer vehicle, and having an additional pressure output (S) for connecting an additional line (54) of the trailer vehicle, in which the brake pressure output (C) can be connected in a stepped manner to the reservoir pressure input (P) or to the tank output (T) by means of an electronically controllable brake control valve (34), and in which the additional pressure output (S) can be connected either to the reservoir pressure input (P), with a reduction in an output pressure of the reservoir pressure to an additional pressure, or to the tank output (T) via a valve arrangement (39) having at least one electronically controllable valve (38), wherein the valve arrangement (39) has a pressure-limiting valve (36) and a shut-off valve (38), wherein the pressure-limiting valve (36) and the shut-off valve (38) are arranged one behind the other in series, wherein the shut-off valve (38) is arranged connected downstream of the pressure-limiting valve (36) in terms of flow, and wherein the output pressure of the valve arrangement (39) can be lowered to the additional pressure by means of the pressure-limiting valve (36), **characterized in that** the shut-off valve (38) is designed as a 3/2-way solenoid switching valve, via which the additional pressure output (S) is connected to the tank output (T) in its deenergized state and to the working output of the pressure-limiting valve (36) in its energized state.

2. Trailer control valve (4') of a tractor vehicle for controlling a hydraulic two-line brake system of a trailer vehicle, having a reservoir pressure input (P) for connecting a hydraulic reservoir line (12', 44) of the tractor vehicle, having a tank output (T) for connecting an unpressurized return line (46) of the tractor vehicle, having a brake pressure output (C) for connecting a brake line (50) of the trailer vehicle, and having an additional pressure output (S) for connecting an additional line (54) of the trailer vehicle, in which the brake pressure output (C) can be connected in a stepped manner to the reservoir pressure input (P) or to the tank output (T) by means of an electronically controllable brake control valve (34'), and in which the additional pressure output (S) can be connected either to the reservoir pressure input (P), with a reduction in an output pressure of the reservoir pressure to an additional pressure, or to the tank output (T) via a valve arrangement (39') having at least one electronically controllable valve (38, 38'), wherein the valve arrangement (39') has a pressure-limiting valve (36) and a shut-off valve (38), wherein the pressure-limiting valve (36) and the shut-off valve (38) are arranged one behind the other in series, and wherein the output pressure of the valve arrangement (39') can be lowered to the additional pressure by means of the pressure-limiting valve (36), **characterized in that** the shut-off valve (38) is arranged connected upstream of the pressure-limiting valve (36) in terms of flow, and **in that** the shut-off valve (38) is designed as a 3/2-way solenoid switching valve, via which the additional pressure output (S) is connected to the tank output (T) in its deenergized state and to the reservoir pressure input (P) in its energized state.

3. Trailer control valve according to either of Claims 1 and 2, **characterized in that**, in order to detect the additional pressure prevailing at the additional pressure output (S), an electrohydraulic pressure sensor (74) or an electrohydraulic pressure switch (78) is connected to the additional line (54) inside or outside the trailer control valve (68, 68') close to the additional pressure output (S).

4. Trailer control valve according to one of Claims 1 to 3, **characterized in that** the brake control valve (34, 34') is designed as a 3/3-way proportional solenoid valve or as a 3/2-way proportional solenoid valve with valve spring-side return of the injected brake pressure to the valve piston, via which the brake pressure output (C) is connected unthrottled to the tank output (T) in the deenergized state and unthrottled to the reservoir pressure input (P) in the maximum energized state.

5. Trailer control valve according to one of Claims 1 to 4, **characterized in that**, in order to detect the brake pressure prevailing at the brake pressure output (C), an electrohydraulic pressure sensor (72) is connected to the brake line (50) inside or outside the trailer control valve (68, 68') close to the brake pressure output (C).

6. Trailer control valve according to one of Claims 1 to 5, **characterized in that**, in order to detect the reservoir pressure prevailing at the reservoir pressure input (P), an electrohydraulic pressure sensor (70) is connected to the reservoir line (12', 44) inside or outside the trailer control valve (68, 68') close to the reservoir pressure input (P).

7. Trailer control valve according to one of Claims 1 to 6, **characterized in that**, in order to detect the coupling state of a trailer vehicle, an electrical signal line (58) is connected to an associated electronic control device (6) directly or via the trailer control valve (4, 4', 68, 68').

8. Trailer control valve according to one of Claims 1 to 7, **characterized in that** a brake pressure input (PB, PB') connected to a brake line (20, 20') of the tractor vehicle and a redundant control branch (82, 82') having a pressure-controlled relay valve (86, 86') for the brake pressure-dependent injection of a brake pressure and a redundancy valve (88, 88') for the activation and deactivation of the redundant control branch (82, 82') are provided.

9. Trailer control valve according to Claim 8, **characterized in that** the relay valve (86, 86') is connected to the reservoir pressure input (P), the tank output (T) and via a shuttle valve (90) to the brake pressure output (C) and is provided with a control input, and **in that** the redundancy valve (88, 88') is designed as a 3/2-way solenoid switching valve, by means of which, in the deenergized state, the control input of the relay valve (86, 86') is connected to the brake pressure input (PB, PB') and, in the energized state, to a ventilation output or to the tank output (T).

10. Trailer control valve according to Claim 8 or 9, **characterized in that**, in the case of an arrangement of the shut-off valve (38) connected upstream of the pressure-limiting valve (36), the reservoir input of the relay valve (86'), instead of being connected to the reservoir pressure input (P), is connected to the connecting line (96) between the shut-off valve (38) and the pressure-limiting valve (36) via a connection line (98).

11. Trailer control valve according to Claim 10, **characterized in that** the shut-off valve (38) is protected against fault-induced failure by a controller which maintains the last switching state within the associated electronic control device (6).

12. Trailer control valve according to Claim 10 or 11, **characterized in that** a second shut-off valve (38') is arranged in parallel with the shut-off valve (38), **in that** the second shut-off valve (38') is of identical design to the first shut-off valve (38), and **in that** the working outputs of the two shut-off valves (38, 38') are connected via a shuttle valve (102) to the connecting line (96) leading to the pressure-limiting valve (36).

13. Trailer control valve according to Claim 10 or 11, **characterized in that** a check valve (102) which blocks in the direction of the shut-off valve (38), is unblockable by means of an injected control pressure and has a control input, to which an electronically controllable pilot control valve (104) is connected, is arranged in the connecting line (96) between the shut-off valve (38) and the connection of the connection line (98) leading to the relay valve (86'), and **in that** the pilot control valve (104) is designed as a 3/2-way solenoid switching valve, by means of which the control input of the check valve (102) is connected to the tank output (T) in the deenergized state and is connected to the reservoir pressure input (P) in the energized state.

14. Trailer control valve according to one of Claims 1 to 13, **characterized in that** at least the brake control valve (34, 34'), the pressure-limiting valve (36), the shut-off valve (38, 38'), the relay valve (86, 86'), the redundancy valve (88, 88') and the shuttle valve (90) are connected to one another by means of plug-in and/or screw connections.

15. Trailer control valve according to one of Claims 1 to 13, **characterized in that** at least the brake control valve (34, 34'), the pressure-limiting valve (36), the shut-off valve (38, 38'), the relay valve (86, 86'), the redundancy valve (88, 88') and the shuttle valve (90) are arranged in a common valve housing (62, 62', 76, 76', 92, 100, 100', 100").

## Revendications

1. Vanne (4) de commande de remorque pour un véhicule tracteur, destinée à commander un système de freinage hydraulique à deux conduites d'un véhicule remorqué, comprenant une entrée de pression d'alimentation (P) pour le raccordement d'une conduite d'alimentation hydraulique (12', 44) du véhicule tracteur, comprenant une sortie de réservoir (T) pour le raccordement d'une conduite de retour sans pression (46) du véhicule tracteur, une sortie de pression de freinage (C) pour le raccordement d'une conduite de freinage (50) du véhicule remorqué, et une sortie de pression supplémentaire (S) pour le raccordement d'une conduite supplémentaire (54) du véhicule remorqué, la sortie de pression de freinage (C) étant apte à être reliée de manière étagée à l'entrée de pression d'alimentation (P) ou à la sortie de réservoir (T) au moyen d'une vanne (34) de commande de freinage à commande électronique, et la sortie de pression supplémentaire (S) étant apte à être reliée, par l'intermédiaire d'un agencement de vannes (39) comprenant au moins une vanne à commande électronique (38), soit à l'entrée de pression d'alimentation (P), en abaissant une pression de sortie de la pression d'alimentation à une pression supplémentaire, soit à la sortie de réservoir (T), l'agencement de vannes (39) comprenant une vanne (36) de limitation de pression et une vanne d'arrêt (38), la vanne (36) de limitation de pression et la vanne d'arrêt (38) étant agencées en série, l'une derrière l'autre, la vanne d'arrêt (38) étant agencée fluidiquement en aval de la vanne (36) de limitation de pression, et la pression de sortie de l'agencement de vannes (39) étant apte à être abaissée à la pression supplémentaire au moyen de la vanne (36) de limitation de pression, **caractérisée en ce que** la vanne d'arrêt (38) est réalisée sous la forme d'une vanne magnétique à 3/2 voies, par l'intermédiaire de laquelle la sortie de pression supplémentaire (S) est reliée, à l'état non alimenté, à la sortie du réservoir (T) et, à l'état alimenté, à la sortie de travail de la vanne (36) de limitation de pression.

2. Vanne (4') de commande de remorque d'un véhicule tracteur pour commander un système de freinage hydraulique à deux conduites d'un véhicule remorqué, comprenant une entrée de pression d'alimentation (P) pour le raccordement d'une conduite d'alimentation hydraulique (12', 44) du véhicule tracteur, une sortie de réservoir (T) pour le raccordement d'une conduite de retour sans pression (46) du véhicule tracteur, comprenant une sortie de pression de freinage (C) pour le raccordement d'une conduite de freinage (50) du véhicule remorqué, et comprenant une sortie de pression supplémentaire (S) pour le raccordement d'une conduite supplémentaire (54) du véhicule remorqué, la sortie de pression de freinage (C) étant apte à être raccordée de manière étagée à l'entrée de pression d'alimentation (P) ou à la sortie de réservoir (T) au moyen d'une vanne de commande de freinage (34') à commande électronique, et la sortie de pression supplémentaire (S) étant apte à être raccordée, par l'intermédiaire d'un agencement de vannes (39') comprenant au moins une vanne (38, 38') à commande électronique, soit à l'entrée de pression d'alimentation (P), en abaissant une pression de sortie de la pression d'alimentation à une pression supplémentaire, soit à la sortie de réservoir (T), l'agencement de vannes (39') comprenant une vanne (36) de limitation de pression et une vanne d'arrêt (38) ; la vanne (36) de limitation de pression et la vanne d'arrêt (38) sont agencées en série, l'une derrière l'autre, et la pression de sortie de l'agencement de vannes (39') est apte à être abaissée à la pression supplémentaire au moyen de la vanne (36) de limitation de pression, **caractérisé en ce que** la vanne d'arrêt (38) est agencée fluidiquement en amont de la vanne (36) de limitation de pression, et **en ce que** la vanne d'arrêt (38) est réalisée sous forme d'une vanne magnétique à 3/2 voies, par l'intermédiaire de laquelle la sortie de pression supplémentaire (S) est reliée, à l'état non alimenté, à la sortie du réservoir (T) et, à l'état alimenté, à l'entrée de pression d'alimentation (P).

3. Vanne de commande de remorque selon l'une des revendications 1 ou 2, **caractérisée en ce que**, pour détecter la pression supplémentaire présente à la sortie de pression supplémentaire (S), un capteur de pression électrohydraulique (74) ou un pressostat électrohydraulique (78) est raccordé à la conduite supplémentaire (54) à l'intérieur ou à l'extérieur de la vanne (68, 68') de commande de remorque à proximité de la sortie de pression supplémentaire (S).

4. Vanne de commande de remorque selon l'une des revendications 1 à 3, **caractérisée en ce que** la vanne de commande de freinage (34, 34') est réalisée sous forme d'une vanne magnétique proportionnelle à 3/3 voies ou d'une vanne magnétique proportionnelle à 3/2 voies comprenant une rétroaction côté ressort de vanne de la pression de freinage commandée sur le piston de vanne, par l'intermédiaire de laquelle la sortie de pression de freinage (C) est reliée, à l'état non alimenté, sans étranglement, à la sortie du réservoir (T) et, à l'état alimenté au maximum, sans étranglement, à l'entrée de pression d'alimentation (P).

5. Vanne de commande de remorque selon l'une des revendications 1 à 4, **caractérisée en ce que**, pour détecter la pression de freinage appliquée à la sortie de pression de freinage (C), un capteur de pression électrohydraulique (72) est raccordé à la conduite de frein (50) à l'intérieur ou à l'extérieur de la vanne (68, 68') de commande de remorque à proximité de la sortie de pression de freinage (C).

6. Vanne de commande de remorque selon l'une des revendications 1 à 5, **caractérisée en ce que**, pour détecter la pression d'alimentation appliquée à l'entrée de pression d'alimentation (P), un capteur de pression électrohydraulique (70) est raccordé à la conduite d'alimentation (12', 44) à l'intérieur ou à l'extérieur de la vanne (68, 68') de commande de remorque à proximité de l'entrée de pression d'alimentation (P).

7. Vanne de commande de remorque selon l'une des revendications 1 à 6, **caractérisée en ce que**, pour détecter l'état d'attelage d'un véhicule remorqué, une ligne de signalisation électrique (58) est raccordée directement ou via la vanne de commande de remorque (4, 4', 68, 68') à un appareil de commande électronique (6) associé.

8. Vanne de commande de remorque selon l'une des revendications 1 à 7, **caractérisée en ce que** sont prévues une entrée de pression de freinage (PB, PB') raccordée à une conduite de frein (20, 20') du véhicule tracteur et une branche de commande redondante (82, 82') comprenant une vanne relais commandée par pression (86, 86') pour l'injection d'une pression de freinage en fonction de la pression de freinage, et une vanne de redondance (88, 88') pour l'activation et la désactivation de la branche de commande redondante (82, 82').

9. Vanne de commande de remorque selon la revendication 8, **caractérisée en ce que** la vanne relais (86, 86') est raccordée à l'entrée de pression d'alimentation (P), à la sortie du réservoir (T) et, via une vanne d'inversion (90), à la sortie de pression de freinage (C) et est pourvue d'une entrée de commande, et **en ce que** la vanne de redondance (88, 88') est réalisée sous la forme d'une vanne magnétique à 3/2 voies, au moyen de laquelle, à l'état non alimenté, l'entrée de commande de la vanne relais (86, 86') est reliée à l'entrée de pression de freinage (PB, PB') et, à l'état alimenté, à une sortie de purge ou à la sortie du réservoir (T).

10. Vanne de commande de remorque selon la revendication 8 ou la revendication 9, **caractérisée en ce que** l'entrée d'alimentation de la vanne relais (86') est raccordée, dans le cas où la vanne d'arrêt (38) est agencée en amont de la vanne (36) de limitation de pression, à la conduite de liaison (96) entre la vanne d'arrêt (38) et la vanne (36) de limitation de pression par l'intermédiaire d'une conduite de raccordement (98) au lieu d'être raccordée à l'entrée de pression d'alimentation (P).

11. Vanne de commande de remorque selon la revendication 10, **caractérisée en ce que** la vanne d'arrêt (38) est protégée contre une défaillance due à un dysfonctionnement par une commande conservant le dernier état de commutation à l'intérieur du dispositif de commande électronique (6) associé.

12. Vanne de commande de remorque selon la revendication 10 ou la revendication 11, **caractérisée en ce qu'**une deuxième vanne d'arrêt (38') est agencée en parallèle à la vanne d'arrêt (38), **en ce que** la deuxième vanne d'arrêt (38') est de construction identique à la première vanne d'arrêt (38) et **en ce que** les sorties de travail des deux vannes de coupure (38, 38') sont raccordées via une vanne d'inversion (102) à la conduite de raccordement (96) menant à la vanne (36) de limitation de pression.

13. Vanne de commande de remorque selon la revendication 10 ou la revendication 11, **caractérisée en ce que**, dans la conduite de liaison (96) entre la vanne d'arrêt (38) et le raccordement de la conduite de raccordement (98) menant à la vanne relais (86'), est agencé un clapet anti-retour (102) bloquant en direction de la vanne d'arrêt (38) et est apte à être débloqué au moyen d'une pression de commande appliquée, comprenant une entrée de commande à laquelle est raccordée une vanne pilote (104) à commande électronique, et **en ce que** la vanne pilote (104) est réalisée sous forme d'une vanne magnétique à 3/2 voies, au moyen de laquelle l'entrée de commande de la vanne anti-retour (102) est, à l'état non alimenté, reliée à la sortie du réservoir (T), et, à l'état alimenté, à l'entrée de pression d'alimentation (P).

14. Vanne de commande de remorque selon l'une des revendications 1 à 13, **caractérisée en ce qu'**au moins la vanne de commande de frein (34, 34'), la vanne (36) de limitation de pression, la vanne d'arrêt (38, 38'), la vanne relais (86, 86'), la vanne de redondance (88, 88') et la vanne d'inversion (90) sont reliés entre eux au moyen de raccords enfichables et/ou vissés.

15. Vanne de commande de remorque selon l'une des revendications 1 à 13, **caractérisée en ce qu'**au moins la vanne de commande de freinage (34, 34'), la vanne (36) de limitation de pression, la vanne d'arrêt (38, 38'), la vanne relais (86, 86'), la vanne de redondance (88, 88') et la vanne d'inversion (90) sont agencées dans un boîtier de vanne commun (62, 62', 76, 76', 92, 100, 100', 100").
